# EUROPEAN PATENT APPLICATION

(11) **EP 4 354 825 A1**
(43) Date of publication of application: **17.04.2024**
(21) Application number: 22815130.4
(22) Date of filing: 26.05.2022
(51) Int. Cl.: H04L 45/24, H04L 45/00, H04L 45/02

(54) **PATH PROTECTION METHOD, NODE DEVICE, CONTROLLER, AND STORAGE MEDIUM**

(30) Priority: 31.05.2021 CN 202110597226
(71) Applicant: ZTE Corporation, Shenzhen, Guangdong 518057 (CN)
(72) Inventor: FU, Zhitao, Shenzhen, Guangdong 518057 (CN); DENG, Dachong, Shenzhen, Guangdong 518057 (CN); QIU, Ziyang, Shenzhen, Guangdong 518057 (CN); CHEN, Qing, Shenzhen, Guangdong 518057 (CN); WANG, Haoru, Shenzhen, Guangdong 518057 (CN); QIAO, Jian, Shenzhen, Guangdong 518057 (CN)
(74) Representative: Iannone, Carlo Luigi
(86) International application number: PCT/CN2022/095099
(87) International publication number: WO 2022/253084

(57) **Abstract**

Provided are a path protection method, a node device, a controller, and a storage medium. The path protection method used for a control panel of a node device includes acquiring a primary path and at least one standby path and sending the primary path and the at least one standby path to a forwarding plane according to a preset path protection control policy such that in response to the failure of the primary path, the forwarding plane switches a service to one standby path among the at least one standby path directly. The primary path and the at least one standby path are sent to the forwarding plane simultaneously. If the primary path fails, the forwarding plane switches to the standby path directly, implementing rapid path switching and thereby effectively avoiding service packet loss.

## Description

The present application claims priority to Chinese Patent Application No. 202110597226.4 filed with the China National Intellectual Property Administration (CNIPA) on May 31, 2021, the disclosure of which is incorporated herein by reference in its entirety.

### TECHNICAL FIELD

Embodiments of the present application relate to the field of communication technology, for example, a path protection method, a node device, a controller, and a storage medium.

### BACKGROUND

Segment routing (SR) technology refers to that a group of labels are pressed in a message through a source node to constrain a path of the message. Such a group of labels represent one path. SR policies are a set of segment routing traffic engineering (SR-TE) architecture. An SR policy has a group of candidate paths, and one candidate path has one or more segment lists.

At present, if one SR policy has multiple candidate paths, a candidate path with the highest priority is usually selected as an actual forwarding path. Load sharing is carried out within multiple segment lists in the candidate path. When the optimal candidate path fails, a suboptimal candidate path is selected as the actual forwarding path. However, in the processing from the failure of the optimal candidate path to the alternative selection of the suboptimal path as the actual forwarding path, packet loss is easy to occur, thereby affecting service transmission.

### SUMMARY

The following is a summary of the subject matter described herein in detail. The summary is not intended to limit the scope of the claims.

Embodiments of the present application provide a path protection method, a node device, a controller, and a storage medium so as to implement rapid path switching, thereby effectively avoiding service packet loss.

In a first aspect, the present application provides a path protection method. The method is applied to a control plane of a node device and includes the steps below.

A primary path and at least one standby path are acquired.

The primary path and the at least one standby path are sent to a forwarding plane according to a preset path protection control policy such that in response to failure of the primary path, the forwarding plane switches a service to one standby path among the at least one standby path directly.

In a second aspect, the present application further provides a path protection method. The method is applied to a forwarding plane of a node device and includes the step below.

A primary path and at least one standby path from a control plane are received so as to in response to failure of the primary path, switch a service to one standby path among the at least one standby path directly.

In a third aspect, the present application further provides a path protection method. The method is applied to a controller and includes the step below.

At least two candidate paths are sent to a control plane of a node device such that the control plane of the node device performs the path protection method described in the first aspect. Each candidate path among the at least two candidate paths carries a path protection flag. The at least two candidate paths include a primary path and at least one standby path.

In a fourth aspect, the present application further provides a node device. The node device includes a first memory, a first processor, and a computer program stored in the first memory and executable by the first processor. When executing the computer program, the first processor performs the path protection method described in the first aspect or the second aspect.

In a fifth aspect, the present application further provides a controller. The controller includes a second memory, a second processor, and a computer program stored in the second memory and executable by the second processor. When executing the computer program, the second processor performs the path protection method described in the third aspect.

In a sixth aspect, the present invention further provides a computer-readable storage medium for storing computer-executable instructions. The computer-executable instructions are configured to perform the path protection method described in the first aspect, the second aspect, or the third aspect.

The first aspect in embodiments of the present application provides a path protection method. The method includes acquiring a primary path and at least one standby path and sending the primary path and the at least one standby path to a forwarding plane according to a preset path protection control policy such that in response to the failure of the primary path, the forwarding plane switches a service to one standby path among the at least one standby path directly. In embodiments of the present application, the primary path and the at least one standby path are sent to the forwarding plane simultaneously. If the primary path fails, the forwarding plane switches to the standby path directly, implementing rapid path switching and thereby effectively avoiding service packet loss.

It is to be understood that the beneficial effects in the second to sixth aspects compared with the related art are the same as the beneficial effects in the first aspect compared with the related art. Reference may be made to the related description in the first aspect and is not repeated here.

### BRIEF DESCRIPTION OF DRAWINGS

To illustrate technical solutions in embodiments of the present application more clearly, the drawings used in description of the embodiments or of the related art will be briefly described below. Apparently, the drawings described below are merely part of the embodiments of the present application, and those of ordinary skill in the art may acquire other drawings based on the drawings described below on the premise that no creative work is done.
FIG. 1 is a diagram of the principle of an SR policy control system.
FIG. 2 is a diagram showing the system architecture for performing a path protection method according to an embodiment of the present application.
FIG. 3 is a flowchart of a path protection method according to an embodiment of the present application.
FIG. 4 is a flowchart of another path protection method according to an embodiment of the present application.
FIG. 5 is a flowchart of another path protection method according to an embodiment of the present application.
FIG. 6 is a structural diagram of an extended type-length-value (TLV) field according to an embodiment of the present application.
FIG. 7 is a structural diagram of another extended TLV field according to an embodiment of the present application.
FIG. 8 is a flowchart of another path protection method according to an embodiment of the present application.
FIG. 9 is a flowchart of another path protection method according to an embodiment of the present application.
FIG. 10 is a flowchart of another path protection method according to an embodiment of the present application.
FIG. 11 is a flowchart of another path protection method according to an embodiment of the present application.
FIG. 12 is a flowchart of another path protection method according to an embodiment of the present application.
FIG. 13 is a flowchart of another path protection method according to an embodiment of the present application.
FIG. 14 is a flowchart of another path protection method according to an embodiment of the present application.
FIG. 15 is a diagram of the principle of an SR policy control system according to an embodiment of the present application.

### DETAILED DESCRIPTION

In the description hereinafter, for illustration and not for limitation, specific details such as particular system architecture and technology are set forth in order to provide a thorough understanding of embodiments of the present application. However, those skilled in the art should understand that embodiments of the present application may also be implemented in other embodiments without these specific details. In other circumstances, the detailed description of a well-known system, an apparatus, a circuit and a method is omitted so that unnecessary details do not interfere with the description of embodiments of the present application.

It is to be noted that although the flowcharts illustrate logical sequences, in some circumstances, the illustrated or described steps may be executed in sequences different from those in the flowcharts. The terms "first", "second" and the like in the description, claims and above drawings of the present application are used to distinguish between similar objects and are not necessarily used to describe a particular order or sequence.

It is also to be understood that in the specification of the present invention, the description of reference to, for example, "an embodiment" or "some embodiments" means a specific characteristic, a structure, or a feature described in connection with the embodiment is included in one or more embodiments of the present invention. Accordingly, statements such as "in an embodiment," "in some embodiments," "in other embodiments,", and "in some other embodiments," appearing in different places in this specification do not necessarily refer to the same embodiment but mean "one or more but not all embodiments," unless otherwise specifically emphasized. the terms "including", "comprising", "having" and any other variations thereof all mean "including but not limited to", unless otherwise specifically emphasized.

Segment routing (SR) technology refers to that a group of labels are pressed in a message (service message) through a source node to constrain a path of the message. Such a group of labels represent one path. SR policies are a set of segment routing traffic engineering (SR-TE) architecture. An SR policy has a group of candidate paths and, one candidate path has one or more segment lists.

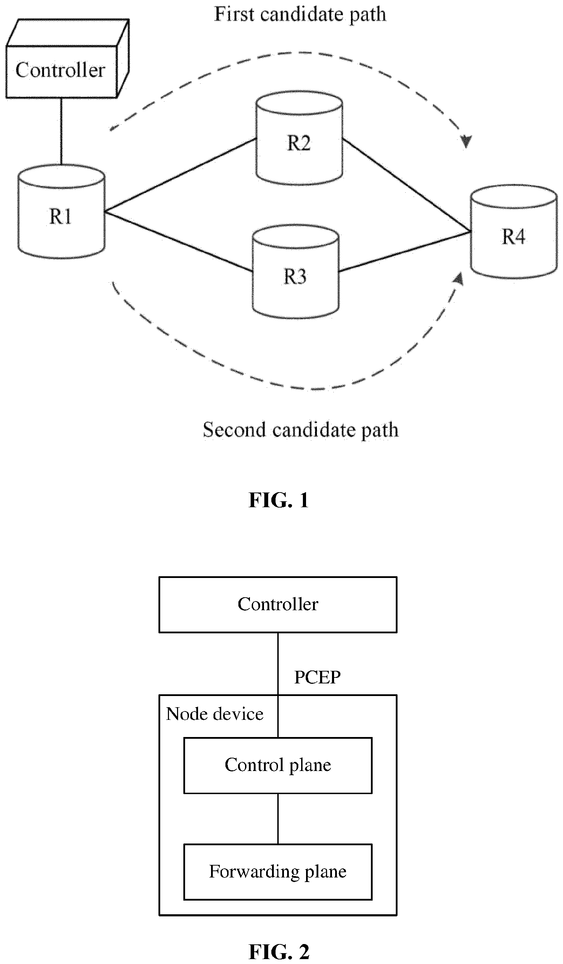

At present, if one SR policy has multiple candidate paths, a candidate path with the highest priority is usually selected as an actual forwarding path. Load sharing is carried out within multiple segment lists in the candidate path. When the optimal candidate path fails, a suboptimal candidate path is selected as the actual forwarding path. That is, a forwarding effective rule of the SR policy is related to priorities. The SR policy includes, but is not limited to, three issuing manners, that is, configuration, border gateway protocol (BGP), and path computation element communication protocol (PCEP). The configuration manner is generally to implement the issuing of the SR policy through local input. In BGP manner and the PCEP manner, a controller issues the SR policy to a node device through the BGP and the PCEP. For example, the controller may be networked together with the node device and issue the SR policy to the node device by using the PCEP. The node device forwards the service (or service data) according to an SR-policy forwarding path issued by the controller. For example, referring to FIG. 1, the controller issues the SR policy to a first node device R1 (that is, head node) through the PCEP. A control plane of the first node device R1 receives the issued SR policy, selects a candidate path with the highest priority, and issues the candidate path to a forwarding plane for service forwarding.

However, in the processing from the failure of the optimal candidate path to the alternative selection of the suboptimal path as the actual forwarding path, packet loss is easy to occur, thereby affecting service transmission. For example, referring to FIG. 1, each of the first node device R1, a second node device R2, a third node device R3, and a fourth node device R4 is a node device. The controller issues the SR policy to the first node device R1 through a PCEP channel, which includes two candidate paths. Actual paths include a first candidate path Candidate Path1 and a second candidate path Candidate Path2. According to priorities of the candidate paths, the first node device R1 selects one path as the actual forwarding path. If the candidate path Candidate Path1 has the highest priority, the candidate path Candidate Path1 takes effect in the forwarding plane. If the candidate path Candidate Path1 fails, after the first node device R1 perceives the failure, the second candidate path Candidate Path2 is notified from the control plane to the forwarding plane to take effect second candidate path Candidate Path2 in the forwarding plane. During the switch of candidate paths in the forwarding plane, service packet loss is easy to occur, thereby affecting service transmission.

On this basis, embodiments of the present application provide a path protection method, a node device, a controller, and a storage medium. In embodiments of the present application, a primary path and a standby path are sent to a forwarding plane simultaneously. If the primary path fails, the forwarding plane switches to the standby path directly, implementing rapid path switching and thereby effectively avoiding service packet loss.

The path protection method according to an embodiment of the present application may be performed in a processor. The processor may include one or more processing units. Different processing units may be independent components or may be integrated in one or more components. A detailed description of embodiments of the present application is given hereinafter with reference to the accompanying drawings.

As shown in FIG. 2, FIG. 2 is a diagram showing the system architecture for performing a path protection method according to an embodiment of the present application. In the example of FIG. 2, the system architecture includes a controller and at least one node device.

The controller may be an independent physical entity or a logical entity. The controller may be a server or a terminal device. A terminal device may be a mobile terminal device or a non-mobile terminal device. A mobile terminal device may be, for example, a mobile phone, a tablet computer, a notebook computer, a palmtop computer, a vehicle-mounted terminal device, a wearable device, an ultra-mobile personal computer, a netbook, a personal digital assistant, a router, a switch, a customer premises equipment (CPE), or a USB WIFI (UFi) device. A non-mobile terminal device may be, for example, a personal computer, a television, a teller machine, or a self-service machine. This is not specifically limited in embodiments of the present application. In some embodiments, the controller may be a node device in a local domain or a node device in other domains. In some embodiments, the controller may be a software-defined network (SDN) controller.

A node device is a forwarding node and communicates with the controller through a communication protocol. The communication protocol may be, for example, BGP or PCEP. The node device includes a control plane and a forwarding plane.

The control plane is used for transmitting instructions, calculating entries, and the like, for example, protocol message forwarding, protocol entry calculation and maintenance. For example, in a routing device, the control plane takes charge of the progress of routing protocol learning and routing entry maintenance. In some embodiments, the control panel may be implemented in a main control module in the node device.

The forwarding plane is used for, for example, encapsulating and forwarding service data messages. For example, the receiving, de-encapsulating, encapsulating and forwarding of a service data message all belong to the category of the forwarding plane. For example, after receiving an Internet Protocol (IP) message, the routing device needs to, for example, de-encapsulate the message, query a routing table, and forward the message from an outgoing interface. The forwarding plane in the device takes charge of the progress of the preceding behaviors. In some embodiments, the forwarding panel may be implemented in a line card in the node device.

In some embodiments, the control plane is used for receiving, through a communication protocol like the BGP or the PCEP, an SR policy issued from the controller, then selecting a candidate path according to the SR policy, and issuing the candidate path to the forwarding plane for service forwarding.

In some embodiments, the node device is generally a head node.

In some embodiments, the node device is a digital communication device that supports multi-protocol label switching (MPLS) or SRv6 (that is, SR + IPv6 technology) forwarding, for example, a router or a switch.

In some embodiments, the node device may be a centralized device. That is, the control plane and the forwarding plane are integrated with each other. For example, the node device may be a node device in which the main control module and the line card are integrated with each other. The node device may also be a distributed device. That is, the control plane and the forwarding plane are separated from each other. For example, the main control module and the line card are separated from each other.

The system architecture and application scenarios described in embodiments of the present application are intended to more clearly explain the technical solutions of embodiments of the present application and do not limit the technical solutions provided in embodiments of the present application. It can be seen by those skilled in the art that with the evolution of the system architecture and the emergence of new application scenarios, the technical solutions provided in embodiments of the present application are equally applicable to similar technical problems.

It is to be understood by those skilled in the art that the system architecture shown in FIG. 2 does not limit embodiments of the present application and that the system architecture may include more or fewer components than those illustrated or may be configured by combining certain components or using different components.

In the system architecture shown in FIG. 2, each component may call its stored path protection program to perform the path protection method.

Based on the preceding system architecture, each embodiment of a path protection method in embodiments of the present application is provided.

It is to be noted that in some embodiments, the present application may be applied to scenarios where a software-defined network (SDN) controller and a node device are hybrid networked. For example, the present application may be applied to scenarios such as an IP radio access network (IPRAN) and a slicing packet network (SPN).

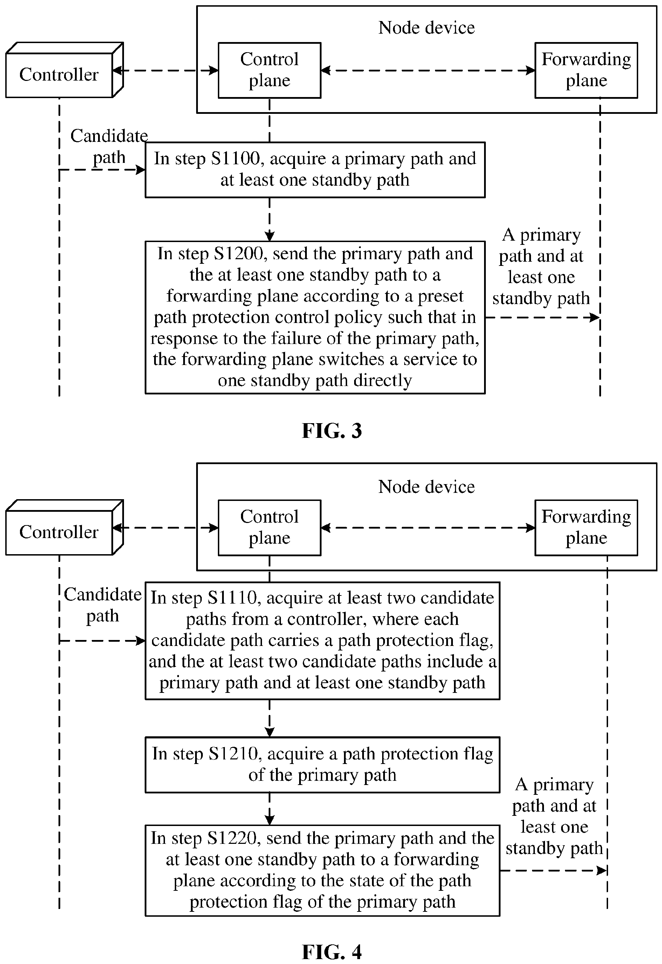

As shown in FIG. 3, an embodiment of the present application provides a path protection method. The method includes the steps below.

The path protection method is applied to a control plane of a node device and includes the steps below.

In S 1100, a primary path and at least one standby path are acquired.

In S1200, the primary path and the at least one standby path are sent to a forwarding plane according to a preset path protection control policy such that in response to the failure of the primary path, the forwarding plane switches a service to one standby path directly.

In some embodiments, the present application provides an SR policy path protection method. A candidate path with the highest priority and a candidate with another priority (for example, a candidate path with the second highest priority) that are in an SR policy are selected specifically. The candidate path with the highest priority serves as the primary path. The candidate path with another priority may serve as a standby path. For example, the candidate path with the second highest priority serves as a standby path. A standby path may also be referred to as a protection path. The primary path and the at least one standby path are issued to the forwarding plane simultaneously. If the primary path fails, the forwarding plane directly switches to the standby path, thereby effectively avoiding service packet loss. In some embodiments, the SR policy in the present application may be SR MPLS or SRv6, which is not limited in the present application.

In some embodiments, in step S1100, one or more standby paths may be issued by the control plane to the forwarding plane. For example, in the case of one standby path, the candidate path with the highest priority may be selected as the primary path, and the candidate path with the second highest priority serves as the standby path. In the case of multiple standby paths, the candidate path with the highest priority may be selected as the primary path, and candidate paths with other priorities serve as the standby paths and are sorted according to priorities. For example, the candidate path with the second highest priority serves as a first standby path, a candidate path with the third highest priority serves as a second standby path, and the rest can be done in the same way.

In some embodiments, the SR policy includes but is not limited to three issuing manners, that is, a configuration issuing manner, a BGP issuing manner, and a PCEP issuing manner. The configuration issuing manner is generally to implement the issuing of the SR policy through local input. In the BGP issuing manner and the PCEP issuing manner, a controller issues the SR policy to the node device through BGP and PCEP. For example, the controller may be networked together with the node device and issue the SR policy to the node device by using the PCEP. Therefore, in step S 1100, the primary path and the at least one standby path may be acquired through local input; alternatively, the primary path and the at least one standby path from the controller may be acquired through, for example, the BGP and the PCEP. This is not limited in the present application.

In embodiments of the present application, the primary path and the at least one standby path are sent to a forwarding plane simultaneously. If the primary path fails, the forwarding plane switches to the standby path directly, implementing rapid path switching and thereby effectively avoiding service packet loss.

In some embodiments, in step S1200, the path protection control policy may be a flag control policy configured flexibly according to a path protection flag or may be a local control policy that is uniformly set in the node device locally and may be applied globally, which is not limited in the present application.

The case where the path protection control policy is a flag control policy and the case where the path protection control policy is a local control policy are introduced separately hereinafter.

In some embodiments, the path protection control policy is a flag control policy.

Referring to FIG. 4, the step of acquiring the primary path and the at least one standby path includes the step below.

In step S1110, at least two candidate paths from the controller are acquired. Each candidate path carries a path protection flag. The at least two candidate paths include the primary path and the at least one standby path.

The step of sending the primary path and the at least one standby path to the forwarding plane includes the steps below.

In step S1210, a path protection flag of the primary path is acquired.

In step S1220, the primary path and the at least one standby path are sent to the forwarding plane according to the state of the path protection flag of the primary path.

In some embodiments, a field of a communication protocol (for example, the PCEP or the BGP) between the controller and the node device may be extended to identify whether the current candidate path is the primary path or a standby path. Therefore, the node device determines, in the control plane and according to the state of the path protection flag, whether the candidate path needs protection. Moreover, the node device issues the primary and standby information of the candidate path to the forwarding plane according to a determination result for primary and standby bonding.

The candidate path carries the path protection flag. The node device determines, in the control plane and according to the path protection flag, whether the candidate path needs protection. If the protection is needed, when the candidate path serves as an effective candidate path with the highest priority (e.g. the primary path) and is issued to the forwarding plane, the candidate path with the second highest priority is added as a standby path and is issued to the forwarding plane together. Moreover, the primary and standby relationship is set. If no protection is needed, when the candidate path serves as an effective candidate path with the highest priority (the primary path), only the current candidate path is issued to the forwarding plane. In this case, the controller may configure the path protection flag of the candidate path flexibly according to needs so as to determine whether the candidate path needs protection, resulting in high flexibility.

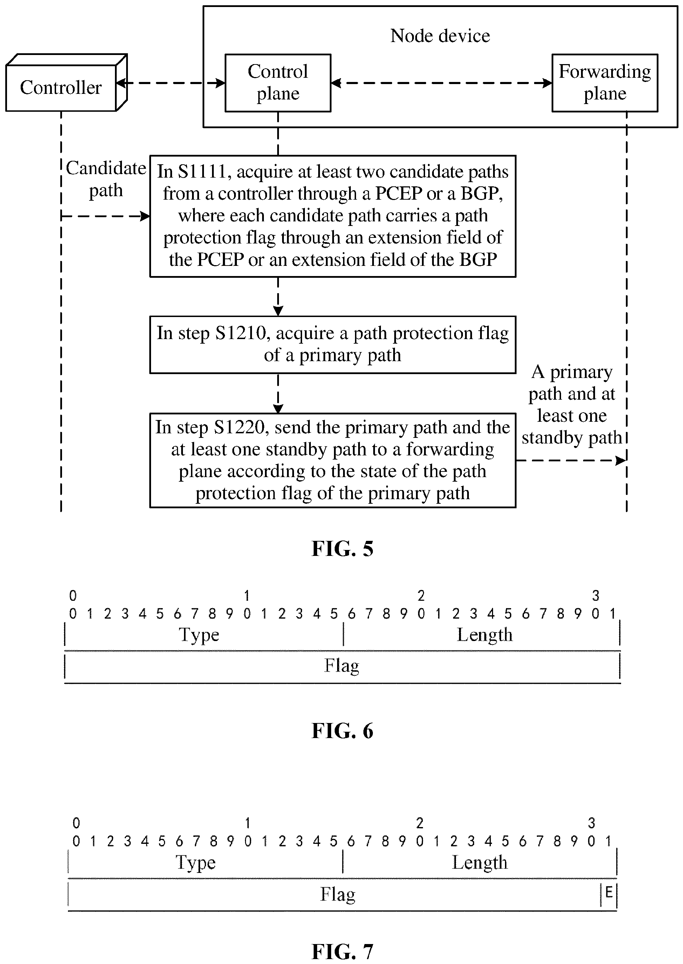

Referring to FIG. 5, in some embodiments, the step of acquiring the at least two candidate paths from the controller includes the step below.

In S 1111, the at least two candidate paths from the controller are acquired through the PCEP or the BGP. Each candidate path carries the path protection flag through an extension field of the PCEP or an extension field of the BGP.

In some embodiments, the communication protocol between the controller and the node device may be the PCEP or the BGP. The path protection flag may be carried through the extension field of the PCEP or the extension field of the BGP. An example in which the communication protocol is the PCEP is taken for description hereinafter.

In some embodiments, the step of acquiring the at least two candidate paths from the controller includes acquiring the at least two candidate paths from the controller through the PCEP.

Each candidate path carries the path protection flag through a type-length-value (TLV) field of the PCEP.

In some embodiments, one path protection flag may be added in a candidate path in the SR policy issued through the PCEP. A function of the path protection flag is to indicate whether protection is needed when the candidate path is used as the primary path. The following method is included but not limited to: One new TLV field (which is customizable for network communication) is extended in the SR policy and is used for carrying the path protection flag, thereby implementing SR policy path protection conveniently and flexibly.

In some embodiments, referring to FIG. 6, the TLV field occupies a total of 64 bits (8 bytes), including a Type subfield which is used for identifying the type of the field and occupies 16 bits, a Length subfield which is used for identifying the length of the field and occupies 16 bits, and a Flag subfield (Value subfield) which is used for carrying data content and occupies 32 bits.

Exemplarily, referring to FIG. 7, one bit (e.g. E) in the Flag field may be defined for carrying the preceding path protection flag. When the node device receives the candidate path in the SR policy issued through the PCEP and the candidate path carries an E flag (for example, the state of the path protection flag is 1), it indicates that a standby path needs to be issued to the forwarding plane together when the candidate path is selected as the primary path. When the node device receives the candidate path in the SR policy issued through the PCEP and the candidate path does not carry the path protection flag (that is, has no extended TLV), or when the node device receives the candidate path in the SR policy issued through the PCEP and the path protection flag carried by the candidate path is in the state of no protection (for example, the state of the path protection flag is 0), it indicates that no standby path needs to be issued to the forwarding plane when the candidate path is selected as the primary path.

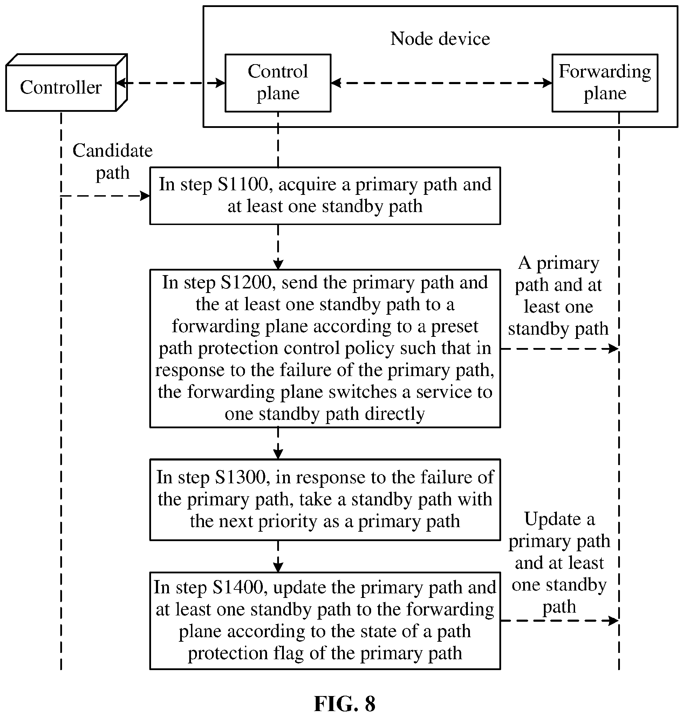

Referring to FIG. 8, in some embodiments, a path protection method further includes the steps below.

In step S1300, in response to the failure of the primary path, a standby path with the next priority is taken as a primary path.

In step S1400, the primary path and at least one standby path are updated to the forwarding plane according to the state of a path protection flag of the primary path.

In some embodiments, when the primary path fails, the forwarding plane directly switches the service to the standby path with the next priority. That is, the standby path with the next priority becomes an actual forwarding path. The control panel perceives the failure of the primary path, takes the standby path with the next priority as the new primary path, and determines, according to the state of the path protection flag of the new primary path, whether the new primary path needs protection. If the protection is needed, a candidate path with the next priority is added as a standby path and is issued to the forwarding plane together, with the primary and standby relationship well set. If no protection is needed, only the current candidate path is issued to the forwarding plane.

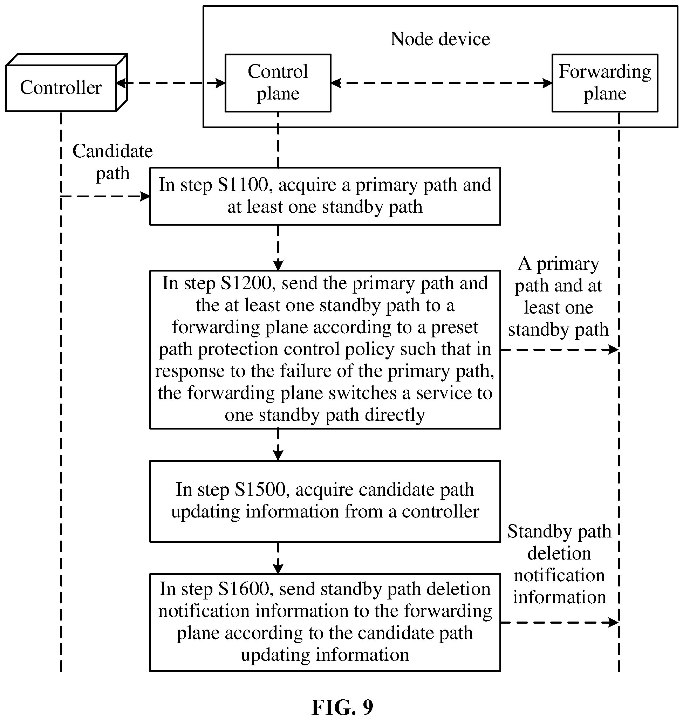

Referring to FIG. 9, in some embodiments, a path protection method further includes the steps below.

In step S1500, candidate path updating information from the controller is acquired.

In step S1600, standby path deletion notification information is sent to the forwarding plane according to the candidate path updating information.

In some embodiments, the control plane may update the protection state of a candidate path issued to the forwarding plane. For example, the node device may acquire the effective candidate path updating information from the controller. When the candidate path updating information indicates the current primary path, the path protection flag of the primary path is acquired. It is determined according to the path protection flag of the primary path whether the primary path needs protection. Alternatively, when the candidate path updating information indicates the current primary path and when the candidate path updating information carries no path protection flag, it is determined that the current primary path needs no protection. When the primary path needs no protection, the controller sends the standby path deletion notification information to the forwarding plane, notifying the forwarding plane that only the primary path is reserved and that a standby path is deleted.

On one hand, embodiments of the present application can implement path protection control with relatively small granularity (for example, aimed at a specific application) through the flag control policy, resulting in good flexibility. On the other hand, the flag control policy enables path protection to be completely managed by the controller, reducing management sources and helping with centralized management.

In some embodiments, the path protection control policy is a local control policy.

In some embodiments, after the primary path and the at least one standby path are issued through the SR policy to the forwarding plane, the local control policy of the device may be used for controlling. The local control policy may be a local control policy that is uniformly set in the control plane of the node device locally and may be applied globally. For example, the local control policy may be that the primary path and the at least one standby path are sent to the forwarding plane for all received SR policies.

In embodiments of the present application, the primary path and the at least one standby path are sent to the forwarding plane simultaneously. If the primary path fails, the forwarding plane switches to the standby path directly, implementing rapid path switching and thereby effectively avoiding service packet loss.

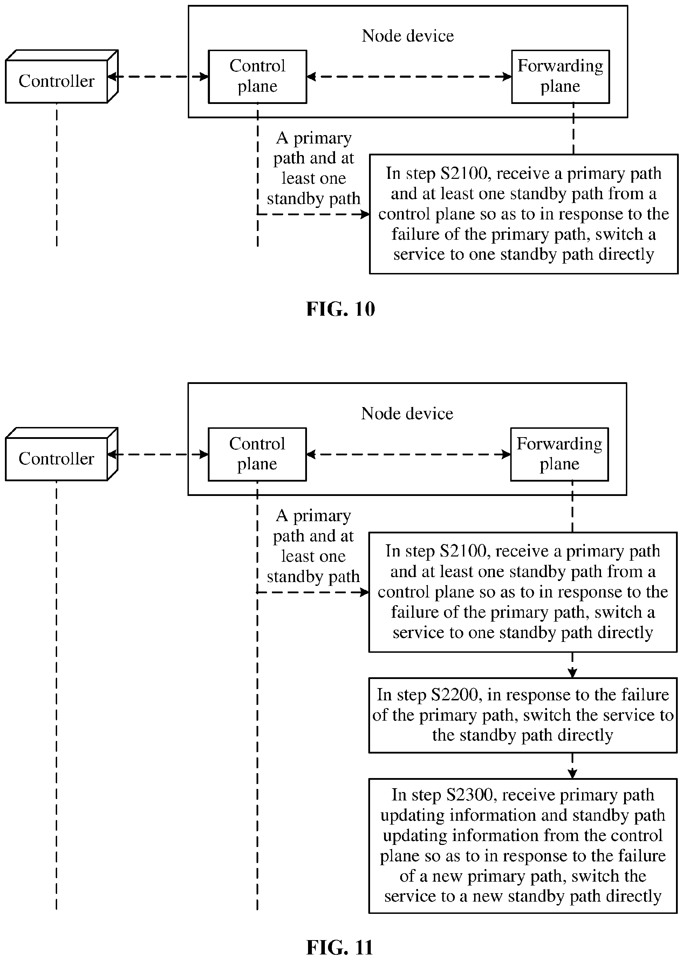

Additionally, referring to FIG. 10, the present application further provides a path protection method. The method is applied to a forwarding plane of a node device and includes the step below. In step S2100, a primary path and at least one standby path from a control plane are received so as to in response to the failure of the primary path, switch a service to one standby path directly.

In some embodiments, step S2100 corresponds to the preceding steps S1100 and S1200. That is, the control panel issues the primary path and the at least one standby path to the forwarding plane by performing the preceding steps S 1100 and S1200. The forwarding plane receives the primary path and the at least one standby path from the control panel by performing step S2100. When the primary path fails, the service is directly switched to a standby path. The standby path serves as an actual forwarding path.

In embodiments of the present application, the primary path and the at least one standby path are sent to the forwarding plane simultaneously. If the primary path fails, the forwarding plane switches to the standby path directly, implementing rapid path switching and thereby effectively avoiding service packet loss.

Referring to FIG. 11, in some embodiments, a path protection method further includes the steps below.

In step S2200, in response to the failure of the primary path, the service is switched to the standby path directly.

In step S2300, primary path updating information and standby path updating information from the control plane are received so as to in response to the failure of a new primary path, switch the service to a new standby path directly.

In some embodiments, step S2300 corresponds to the preceding step S1400. That is, the control panel issues the primary path and the at least one standby path to the forwarding plane by performing the preceding step S1400. The forwarding plane receives the primary path and the primary path updating information and the standby path updating information from the control plane by performing step S2300 to update the primary and standby relationship. For example, if the new primary path needs protection, the forwarding plane receives the primary path updating information and the standby path updating information from the control plane by performing step S2300 to update primary and standby bonding. If the new primary path needs no protection, the forwarding plane only receives the current primary path or does not need to receive the primary path updating information.

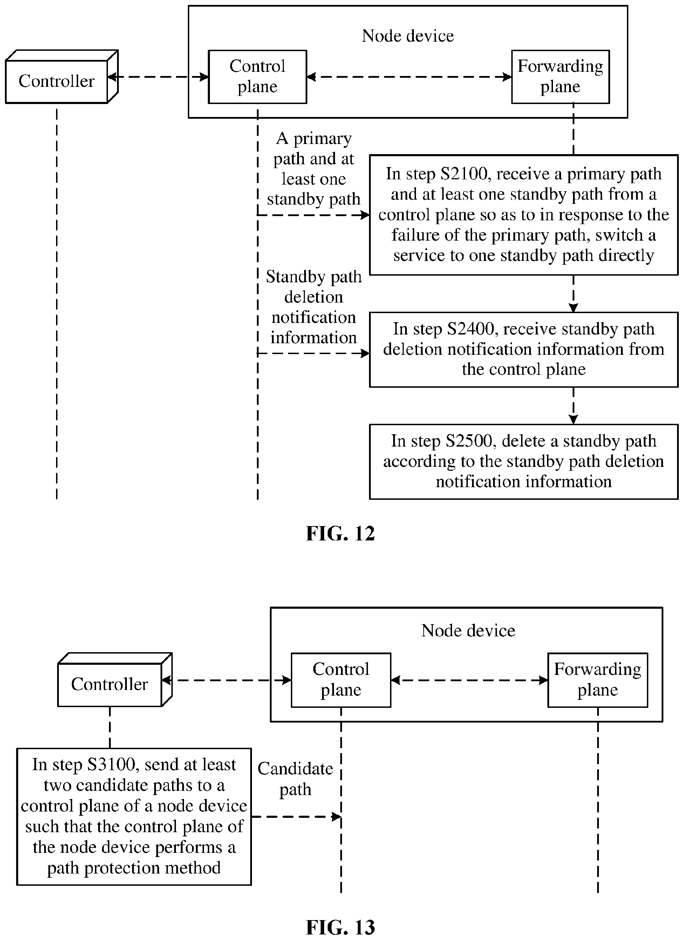

Referring to FIG. 12, in some embodiments, a path protection method further includes the steps below.

In step S2400, standby path deletion notification information from the control plane is received. In step S2500, a standby path is deleted according to the standby path deletion notification information.

In some embodiments, step S2400 corresponds to the preceding step S1600. That is, the control plane issues the standby path deletion notification information to the forwarding plane by performing the preceding step S1600. The forwarding plane receives the standby path deletion notification information from the control plane by performing steps S2400 and S2500 to delete the standby path. In this case, the control plane can update the path protection state of a candidate path issued to the forwarding path.

In embodiments of the present application, the primary path and the at least one standby path are sent to the forwarding plane simultaneously. If the primary path fails, the forwarding plane switches to the standby path directly, implementing rapid path switching and thereby effectively avoiding service packet loss.

Additionally, referring to FIG. 13, the present application further provides a path protection method. The method is applied to a controller and includes the step below.

In step S3100, at least two candidate paths are sent to a control plane of a node device such that the control plane of the node device performs the preceding path protection method, for example, the path protection method including the preceding steps S1100 and S1200, the path protection method including the preceding steps S1100, S1200, S1300, and S1400, or the path protection method including the preceding steps S1100, S1200, S1500, and S1600. Each candidate path carries a path protection flag. The at least two candidate paths include a primary path and at least one standby path.

In some embodiments, step S3100 corresponds to the preceding step S 1100. That is, the controller issues the at least two candidate paths to the control plane of the node device by performing step S3100. The control plane of the node device receives the at least two candidate paths from the controller by performing step S 1100.

In embodiments of the present application, the primary path and the at least one standby path are sent to the forwarding plane simultaneously. If the primary path fails, the forwarding plane switches to a standby path directly, implementing rapid path switching and thereby effectively avoiding service packet loss.

In some embodiments, the step of sending the at least two candidate paths to the control plane of the node device includes the step below.

In S3110, the at least two candidate paths are sent to the control plane of the node device through a PCEP or a BGP. Each candidate path carries the path protection flag through an extension field of the PCEP or an extension field of the BGP.

In some embodiments, step S3110 corresponds to the preceding step S1111. That is, the controller issues the at least two candidate paths to the control plane of the node device through the PCEP or the BGP by performing step S3110. The control plane of the node device receives the at least two candidate paths from the controller by performing step S 1111. Each candidate path may carry the path protection flag through the extension field of the PCEP or the extension field of the BGP.

In some embodiments, the step of sending the at least two candidate paths to the control plane of the node device includes sending the at least two candidate paths to the control plane of the node device through the PCEP.

Each candidate path carries the path protection flag through a type-length-value (TLV) field of the PCEP.

In some embodiments, the controller may add one path protection flag in a candidate path in the SR policy issued through the PCEP. A function of the path protection flag is to indicate whether protection is needed when the candidate path is used as the primary path. The following method is included but not limited to: One new TLV field (which is customizable for network communication) is extended in the SR policy and is used for carrying the path protection flag, thereby implementing SR policy path protection conveniently and flexibly.

In some embodiments, referring to FIG. 6, the TLV field occupies a total of 64 bits (8 bytes), including a Type subfield which is used for identifying the type of the field and occupies 16 bits, a Length subfield which is used for identifying the length of the field and occupies 16 bits, and a Flag subfield (Value subfield) which is used for carrying data content and occupies 32 bits. Exemplarily, referring to FIG. 7, one bit (e.g. E) in the Flag field may be defined for carrying the preceding path protection flag. When an E flag (for example, the state of the path protection flag is 1) is carried in the candidate path in the SR policy issued through the PCEP by the controller, it indicates that the control plane of the node device needs to issue a standby path to the forwarding plane together when the candidate path is selected as the primary path. When the path protection flag (that is, has no extended TLV) is not carried in the candidate path in the SR policy issued through the PCEP by the controller, or when the path protection flag is carried in the candidate path in the SR policy issued through the PCEP by the controller and the path protection flag in the state of no protection (for example, the state of the path protection flag is 0), it indicates that the control plane of the node device does not need to issue a standby path to the forwarding plane when the candidate path is selected as the primary path.

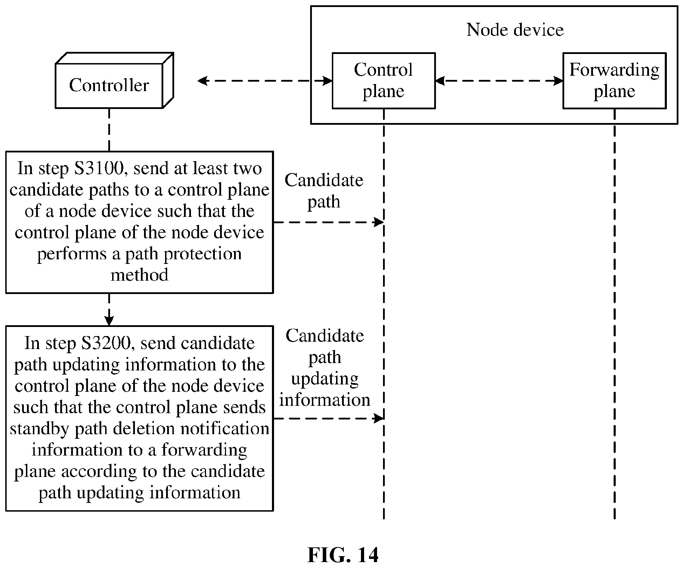

Referring to FIG. 14, in some embodiments, a path protection method further includes the step below.

In step S3200, candidate path updating information is sent to the control plane of the node device such that the control plane sends standby path deletion notification information to the forwarding plane according to the candidate path updating information.

In some embodiments, step S3200 corresponds to the preceding step S1500. That is, when the controller uses the PCEP or BGP to issue the candidate path updating information to the control plane of the node device by performing step S3200, the control plane of the node device receives the candidate path updating information from the controller by performing step S1500 such that the control plane sends the standby path deletion notification information to the forwarding plane according to the candidate path updating information.

In some embodiments, the control plane may update the protection state of a candidate path issued by the control plane of the node device to the forwarding plane. For example, the node device may acquire the effective candidate path updating information from the controller. When the candidate path updating information indicates the current primary path, the path protection flag of the primary path is acquired. It is determined according to the path protection flag of the primary path whether the primary path needs protection. Alternatively, when the candidate path updating information indicates the current primary path and when the candidate path updating information carries no path protection flag, it is determined that the current primary path needs no protection. When the primary path needs no protection, the controller sends the standby path deletion notification information to the forwarding plane, notifying the forwarding plane that only the primary path is reserved and that a standby path is deleted.

On one hand, embodiments of the present application can implement path protection control with relatively small granularity (for example, aimed at a specific application) through the flag control policy, resulting in good flexibility. On the other hand, the flag control policy enables path protection to be completely managed by the controller, reducing management sources and helping with centralized management.

In embodiments of the present application, the primary path and the at least one standby path are sent to the forwarding plane simultaneously. If the primary path fails, the forwarding plane switches to the standby path directly, implementing rapid path switching and thereby effectively avoiding service packet loss.

Two specific scenario examples are used for further description hereinafter.

### Example one

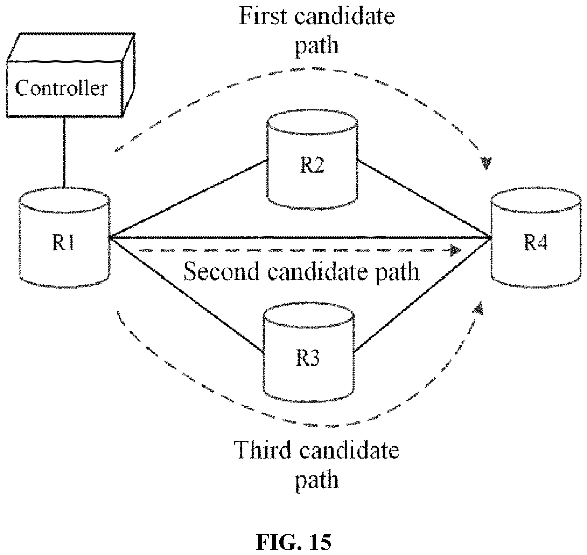

As shown in FIG. 15, a controller issues three candidate paths Candidate Paths to a first node device R1 through a PCEP. The order of priorities of the three candidate paths from high to low is that the first candidate path Candidate Path1 > the second candidate path Candidate Path2 > the third candidate path Candidate Path3.

In step A1, the three candidate paths Candidate Paths each carry an E flag. The first candidate path Candidate Path1 has the highest priority and carries the E flag. In the issuing to a forwarding plane, a control plane of a node device carries the first candidate path Candidate Path1 and the second candidate path Candidate Path2 to serve as a primary path and a standby path. That is, the first candidate path Candidate Path1 serves as the primary path, and the second candidate path Candidate Path2 serves as the standby path.

In step A2, when the first candidate path Candidate Path1 fails, the forwarding plane of the node device switches a service to the second candidate path Candidate Path2 directly. The control plane takes the second candidate path Candidate Path2 as the primary path. Since the second candidate path Candidate Path2 has the E flag, the second candidate path Candidate Path2 and the third candidate path Candidate Path3 serve as the primary path and the standby path respectively to be updated to the forwarding plane.

In step A3, when the second candidate path Candidate Path2 also fails, the forwarding plane switches the service to the third candidate path Candidate Path3 directly. The control plane selects the third candidate path Candidate Path3 as the primary path. Although the third candidate path Candidate Path3 has the E flag, no suboptimal candidate path exists. Therefore, the control plane only takes the third candidate path Candidate Path3 as the primary path and updates the third candidate path Candidate Path3 to the forwarding plane. No standby path is issued to the forwarding plane.

### Example two

As shown in FIG. 15, a controller issues three candidate paths to a first node device R1 through a PCEP. The order of priorities of the three candidate paths from high to low is that the first candidate path Candidate Path1 > the second candidate path Candidate Path 2 > the third candidate path Candidate Path3.

In step B 1, the three candidate paths Candidate Paths each carry an E flag. The first candidate path Candidate Path1 has the highest priority and carries the E flag. In the issuing to a forwarding plane, the first candidate path Candidate Path1 and the second candidate path Candidate Path2 may be carried to serve as a primary path and a standby path respectively.

In step B2, the controller issues candidate path updating information to the first node device R1 through a PCEP and updates the state of the first candidate path Candidate Path1 to carrying no E flag. After the first node device R1 receives the candidate path updating information, the first node device R1 needs to send standby path deletion notification information to the forwarding plane and notifies the forwarding plane that only the information of the primary path is reserved and that the information of the standby path is not reserved in the forwarding plane. After receiving the standby path deletion notification information, the forwarding plane only reserves the information of the first candidate path Candidate Path1 and deletes the second candidate path Candidate Path2. In embodiments of the present application, the primary path and the at least one standby path are sent to the forwarding plane simultaneously. If the primary path fails, the forwarding plane switches to the standby path directly, implementing rapid path switching and thereby effectively avoiding service packet loss.

Additionally, the present application further provides a node device. The node device includes a first memory, a first processor, and a computer program stored in the first memory and executable by the first processor. When executing the computer program, the first processor performs the preceding path protection method.

As a non-transient computer-readable storage medium, the first memory is used for storing non-transient software programs and non-transient computer-executable programs. Additionally, the first memory may include a high-speed random access memory and a non-transient memory, such as at least one disk memory, a flash memory or other non-transient solid-state memories. In some embodiments, the first memory optionally includes memories which are remotely disposed relative to the processor. These remote memories may be connected to the first processor via a network. Examples of the preceding network include, but are not limited to, the Internet, an intranet, a local area network, a mobile communication network, and a combination thereof.

It is to be noted that the node device in this embodiment may be applied as a node device in the system architecture in the embodiment shown in FIG. 2. Additionally, the node device in this embodiment may perform the path protection method in the embodiment shown in FIG. 3 or the embodiment shown in FIG. 10. That is, the node device in this embodiment, the node device in the system architecture in the embodiment shown in FIG. 2, and the path protection method in the embodiment shown in FIG. 3 or the embodiment shown in FIG. 10 all belong to the same concept. Therefore, these embodiments have the same implementation principle and technical effects, which is not repeated here.

The non-transient software programs and instructions required for implementing the path protection method in the preceding embodiments are stored in the first memory. When executed by the processor, the software programs and instructions perform the path protection method in the preceding embodiments, for example, steps S 1100 to S1200 in the described method in FIG. 3, steps S1110 to S1220 in the method in FIG. 4, steps S1111, S1210, and S1220 in the method in FIG. 5, steps S 1100 to S1400 in the method in FIG. 8, steps S 1100 to S1600 in the method in FIG. 9, step S2100 in the method in FIG. 10, steps S2100 to S2300 in the method in FIG. 11, and steps S2100 to S2500 in the method in FIG. 12.

Additionally, the present application further provides a controller. The controller includes a second memory, a second processor, and a computer program stored in the second memory and executable by the second processor. When executing the computer program, the second processor performs the preceding path protection method.

As a non-transient computer-readable storage medium, the second memory is used for storing non-transient software programs and non-transient computer-executable programs. Additionally, the second memory may include a high-speed random access memory and a non-transient memory, such as at least one disk memory, a flash memory or other non-transient solid-state memories. In some embodiments, the second memory optionally includes memories which are remotely disposed relative to the processor. These remote memories may be connected to the second processor via a network. Examples of the preceding network include, but are not limited to, the Internet, an intranet, a local area network, a mobile communication network, and a combination thereof.

It is to be noted that the controller in this embodiment may be applied as a controller in the system architecture in the embodiment shown in FIG. 2. Additionally, the controller in this embodiment may perform the path protection method in the embodiment shown in FIG. 13. That is, the controller in this embodiment, the controller in the system architecture in the embodiment shown in FIG. 2, and the path protection method in the embodiment shown in FIG. 13 all belong to the same concept. Therefore, these embodiments have the same implementation principle and technical effects, which is not repeated here.

The non-transient software programs and instructions required for implementing the path protection methods in the preceding embodiment are stored in the second memory. When executed by the processor, the software programs and instructions perform the path protection method in the preceding embodiment, for example, step S3100 in the described method in FIG. 13 and steps S3100 to S3200 in the method in FIG. 14.

Additionally, the present application further provides a computer-readable storage medium for storing computer-executable instructions. The computer-executable instructions are configured to perform the preceding path protection method.

In some embodiments, the computer-executable storage medium stores the computer-executable instructions. When executed by one processor or controller, for example, one processor in the preceding embodiment of a diagnostic analysis system 100, the computer-executable instructions may cause the preceding processor to perform the path protection method in the preceding embodiments, for example, steps S1100 to S1200 in the method in FIG. 3, steps S1110 to S1220 in the method in FIG. 4, steps S1111, S1210, and S1220 in the method in FIG. 5, steps S1100 to S1400 in the method in FIG. 8, steps S1100 to S1600 in the method in FIG. 9, step S2100 in the method in FIG. 10, steps S2100 to S2300 in the method in FIG. 11, steps S2100 to S2500 in the method in FIG. 12, step S3100 in the method in FIG. 13, and steps S3100 to S3200 in the method in FIG. 14.

It is to be understood by those having ordinary skill in the art that some or all steps of the preceding method and the preceding system may be implemented as software, firmware, hardware and suitable combinations thereof. Some or all physical components are implementable as software executed by a processor such as a central processing unit, a digital signal processor, or a microprocessor, are implementable as hardware, or are implementable as integrated circuits such as application-specific integrated circuits. Such software may be distributed on computer-readable media. The computer-readable media may include computer storage media (or non-transitory media) and communication media (or transitory media). As known to those of ordinary skill in the art, the term, the computer storage media, includes volatile and non-volatile as well as removable and non-removable media implemented in any method or technology for storing information (such as computer-readable instructions, data structures, program modules, or other data). The computer-storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storage, a magnetic cassette, a magnetic tape, disk storage or other magnetic storage apparatus, or any other medium used to store the desired information and accessible by a computer. Moreover, as known to those of ordinary skill in the art, the communication media generally include computer-readable instructions, data structures, program modules, or other data in carriers or in modulated data signals transported in other transport mechanisms and may include any information delivery medium.

A preferred implementation of embodiments of the present application is specifically described above. However, embodiments of the present application are not limited to the preceding implementation. Various equivalent modifications and substitutions may be made by those skilled in the art without departing from the spirit of the present application. These equivalent modifications and substitutions fall within the scope of the claims in embodiments of the present application.

## Claims

1. A path protection method, applied to a control plane of a node device, comprising:
acquiring a primary path and at least one standby path; and
sending the primary path and the at least one standby path to a forwarding plane according to a preset path protection control policy, wherein in response to failure of the primary path, the forwarding plane switches a service to one standby path among the at least one standby path directly.

2. The method according to claim 1, wherein the path protection control policy is a flag control policy;
the acquiring the primary path and the at least one standby path comprises:
acquiring at least two candidate paths from a controller, wherein each candidate path among the at least two candidate paths carries a path protection flag, and the at least two candidate paths comprise the primary path and the at least one standby path; and
the sending the primary path and the at least one standby path to the forwarding plane comprises:
acquiring a path protection flag of the primary path; and
sending the primary path and the at least one standby path to the forwarding plane according to a state of the path protection flag of the primary path.

3. The method according to claim 2, wherein the acquiring the at least two candidate paths from the controller comprises:
acquiring the at least two candidate paths from the controller through a path computation element communication protocol, PCEP, or a border gateway protocol, BGP, wherein the each candidate path carries the path protection flag through an extension field of the PCEP or an extension field of the BGP.

4. The method according to claim 2 or 3, wherein acquiring the at least two candidate paths from the controller comprises acquiring the at least two candidate paths from the controller through the PCEP,
wherein the each candidate path carries the path protection flag through a type-length-value, TLV, field of the PCEP.

5. The method according to any one of claims 2 to 4, further comprising:
in response to the failure of the primary path, configuring a standby path corresponding to a next priority of a priority of the primary path as the primary path; and
updating the primary path and the at least one standby path to the forwarding plane according to a state of a path protection flag of the primary path.

6. The method according to any one of claims 2 to 4, further comprising:
acquiring candidate path updating information from the controller; and
sending standby path deletion notification information to the forwarding plane according to the candidate path updating information.

7. The method according to claim 1, wherein the path protection control policy is a local control policy.

8. A path protection method, applied to a forwarding plane of a node device, comprising:
receiving a primary path and at least one standby path from a control plane so as to in response to failure of the primary path, switch a service to one standby path among the at least one standby path directly.

9. The method according to claim 8, further comprising:
in response to the failure of the primary path, switching the service to the one standby path among the at least one standby path directly; and
receiving primary path updating information and standby path updating information from the control plane so as to in response to failure of a new primary path, directly switch the service a standby path corresponding to the standby path updating information.

10. The method according to claim 8, further comprising:
receiving standby path deletion notification information from the control plane; and
deleting, according to the standby path deletion notification information, a standby path corresponding to the standby path deletion notification information.

11. A path protection method, applied to a controller, comprising:
sending at least two candidate paths to a control plane of a node device such that the control plane of the node device performs the path protection method according to any one of claims 1 to 7, wherein each candidate path among the at least two candidate paths carries a path protection flag, and the at least two candidate paths comprise a primary path and at least one standby path.

12. The method according to claim 11, wherein sending the at least two candidate paths to the control plane of the node device comprises:
sending the at least two candidate paths to the control plane of the node device through a PCEP or a BGP, wherein the each candidate path among the at least two candidate paths carries the path protection flag through an extension field of the PCEP or an extension field of the BGP.

13. The method according to claim 11 or 12, wherein sending the at least two candidate paths to the control plane of the node device comprises:
sending the at least two candidate paths to the control plane of the node device through the PCEP,
wherein the each candidate path carries the path protection flag through a TLV field of the PCEP.

14. The method according to any one of claims 11 to 13, further comprising:
sending candidate path updating information to the control plane of the node device such that the control plane sends standby path deletion notification information to a forwarding plane according to the candidate path updating information.

15. A node device, comprising a first memory, a first processor, and a computer program stored in the first memory and executable by the first processor, wherein when executing the computer program, the first processor performs the path protection method according to any one of claims 1 to 10.

16. A controller, comprising a second memory, a second processor, and a computer program stored in the second memory and executable by the second processor, wherein when executing the computer program, the second processor performs the path protection method according to any one of claims 11 to 14.

17. A computer-readable storage medium for storing computer-executable instructions, wherein the computer-executable instructions are configured to:
perform the path protection method according to any one of claims 1 to 14.
